# EUROPEAN PATENT APPLICATION

(11) **EP 1 199 325 A1**
(43) Date of publication of application: **24.04.2002**
(21) Application number: 00915513.6
(22) Date of filing: 13.04.2000
(51) Int. Cl.: C08G 64/40

(54) **METHOD FOR PRODUCTION OF POLYCARBONATE AND FILTERING DEVICE**

(71) Applicant: TEIJIN LIMITED, Osaka-shi Osaka 541-0054 (JP)
(72) Inventor: MURAKAMI, Masahiro, Iwakuni-shi, Yamaguchi 740-00 14 (JP); SIMONARU, Masasi, Iwakuni-shi, Yamaguchi 740-0014 (JP); SAWAKI, Toru, Iwakuni-shi, Yamaguchi 740-0014 (JP); SASAKI, Katsushi, Iwakuni-shi, Yamaguchi 740-0014 (JP)
(74) Representative: Hallybone, Huw George
(86) International application number: JP0002418
(87) International publication number: WO0183584

(57) **Abstract**

A process for producing a polycarbonate using at least one filter unit which stores a plurality of disk type filter elements having an outer diameter of 15 inches (38.1 cm) or less, an inner diameter/outer diameter ratio of 1/7 or more and an opening size of 40 µm or less and piled up together, and a filter unit.

A high-quality polycarbonate and a molded product thereof can be produced by removing foreign matter efficiently using the filter unit and suppressing discoloration, crosslinking and gel formation in the filter unit at the same time.

The production process and filter unit are especially effective for a polycarbonate produced by an ester exchange method.

## Description

### Field of the Invention

The present invention relates to a process for the production of a polycarbonate having a low content of foreign matter, particularly a process for the production of a polycarbonate having a low content of foreign matter by using a polymer filter (filter unit for polymers), and to a filter unit.

### Description of the Prior Art

Foreign matter contained in a polycarbonate can be generally classified into foreign matter derived from raw materials and from the outside of a reaction system and foreign matter generated in a reactor or a flow path of a high-viscosity material after a reaction. Intrusion of the former foreign matter is prevented by using a filter for removing foreign matter contained in the raw materials or by improving the sealing of the reaction system. Meanwhile, the latter foreign matter is removed by using a filter immediately before the processing of the high-viscosity material into a desired form.

However, deterioration caused by the retention of a polymer, such as discoloration, crosslinking or gel formation occurs in the filter depending upon filtration conditions such as the temperature, viscosity and throughput of a polymer melt to be filtered and the opening size and type of the used filter, thereby exerting a great influence upon the quality of a product.

These problems are serious especially in a polycarbonate recently applied to optical uses such as DVD, MO and CDR which are required to have high density and high accuracy because such problems as foreign matter, discoloration and gel formation have a direct influence upon the optical properties such as block error rate and the mechanical properties such as tensile properties, flexural properties and toughness of the final product. Further, since a gel has the property of changing its shape, even when it is larger than the opening size of a filter, it may pass through the filter to cause an extremely serious problem.

### Summary of the Invention

The present invention is as follows.
1. A process for the production of a polycarbonate, comprising filtering a polycarbonate having a viscosity average molecular weight of 10,000 or more in a molten state with at least one filter unit which stores a plurality of disk type filter elements having an outer diameter of 15 inches (38.1 cm) or less, an inner diameter/outer diameter ratio of 1/7 or more and an opening size of 40 µm or less piled up together.
2. The polycarbonate production process of the above paragraph 1, wherein the inner diameter/outer diameter ratio of each disk type filter element stored is 1/5 or more.
3. The polycarbonate production process of the above paragraphs 1 or 2, wherein the outer diameter of each disk type filter element used is 4 inches (10.2 cm) or more.
4. The polycarbonate production process of any one of the above paragraphs 1 to 3, wherein the outer diameter of each disk type filter element used is 12 inches (30.5 cm) or less and 6 inches (15.2 cm) or more.
5. The polycarbonate production process of any one of the above paragraphs 1 to 4, wherein the number of disk type filter elements constituting one filter unit is 500 or less.
6. The polycarbonate production process of any one of the above paragraphs 1 to 4, wherein the number of disk type filter elements constituting one filter unit is 200 or less.
7. The polycarbonate production process of any one of the above paragraphs 1 to 6, wherein the piling-up clearance between adjacent disk type filter elements (may be simply referred to as "piling-up interval") is substantially 5 mm or less.
8. The polycarbonate production process of any one of the above paragraphs 1 to 7, wherein only one set of disk type filter elements piled up together are stored in one filter unit.
9. The polycarbonate production process of any one of the above paragraphs 1 to 8, wherein each disk type filter element comprises a filter medium composed of a sintered metal fiber texture and/or metal net as a constituent element.
10. The polycarbonate production process of any one of the above paragraphs 1 to 9, wherein the polycarbonate is produced by polycondensing an aromatic diol compound and a carbonic acid diester compound in the presence or absence of a catalyst.
11. The polycarbonate production process of any one of the above paragraphs 1 to 10, wherein the polycarbonate produced by continuously polycondensing an aromatic diol compound and a carbonic acid diester compound in the presence or absence of a catalyst is mixed in a molten state with additives as required and directly filtered with a filter unit without cooling and solidifying it.
12. A filter unit for the production of a polycarbonate, which stores a plurality of disk type filter elements having an outer diameter of 15 inches (38.1 cm) or less, an inner diameter/outer diameter ratio of 1/7 or more and an opening size of 40 µm or less piled up together.
13. The filter unit of the above paragraph 12, wherein the inner diameter/outer diameter ratio of each disk type filter element stored is 1/5 or more.
14. The filter unit of the above paragraphs 12 or 13, wherein the outer diameter of each disk type filter element used is 4 inches (10.2 cm) or more.
15. The filter unit of any one of the above paragraphs 12 to 14, wherein the outer diameter of each disk type filter element used is 12 inches (30.5 cm) or less and 6 inches (15.2 cm) or more.
16. The filter unit of any one of the above paragraphs 12 to 15, wherein the number of disk type filter elements constituting one filter unit is 500 or less.
17. The filter unit of any one of the above paragraphs 12 to 15, wherein the number of disk type filter elements constituting one filter unit is 200 or less.
18. The filter unit of any one of the above paragraphs 12 to 17, wherein the piling-up clearance between adjacent disk type filter elements is substantially 5 mm or less.
19. The filter unit of any one of the above paragraphs 12 to 18 which stores only one set of disk type filter elements piled up together.
20. The filter unit of any one of the above paragraphs 12 to 19, wherein the disk type filter element comprises a filter medium composed of a sintered metal fiber texture and/or metal net as a constituent element.
21. The filter unit of any one of the above paragraphs 12 to 20, wherein the polycarbonate is produced by polycondensing an aromatic diol compound and a carbonic acid diester compound in the presence or absence of a catalyst.

The aromatic polycarbonate in the present invention is not limited to a particular kind and an aromatic polycarbonate obtained by reacting an aromatic diol compound with a carbonate precursor may be used. Examples of the aromatic polycarbonate include polycarbonates obtained by reacting an alkali metal salt of an aromatic diol with phosgene by interfacial polymerization and polycarbonates obtained by reacting an aromatic diol with an aromatic carbonic acid diester by melt polymerization.

Out of these aromatic polycarbonates, polycarbonates obtained by melt polymerization are the most preferred because of the following reasons:
(1) they can be directly obtained in a molten state from a polymerizer,
(2) they do not need to be remolten, and
(3) a large effect can be obtained by using the improved filter unit of the present invention because higher requirements are imposed on the filter unit than a filter unit used in the interfacial polymerization method as a polymerizer and the filter unit are directly connected to each other in the melt polymerization method and the service life of the filter unit has a great influence upon the continuous operation efficiency of polymerization.

The process for the production of a polycarbonate by melt polymerization is a process for melt polycondensing an aromatic diol compound (also to be referred to as "aromatic dihydroxy compound" in the present invention) and a carbonic acid diester compound in the presence of an ester exchange catalyst which comprises a basic nitrogen-containing compound and an alkali metal compound and/or an alkaline earth metal compound.

Examples of the aromatic diol compound include
bis(4-hydroxyphenyl)methane,
2,2-bis(4-hydroxyphenyl)propane,
2,2-bis(4-hydroxy-3-methylphenyl)propane,
4,4-bis(4-hydroxyphenyl)heptane,
2,2-bis(4-hydroxy-3,5-dichlorophenyl)propane,
2,2-bis(4-hydroxy-3,5-dibromophenyl)propane,
bis(4-hydroxyphenyl)oxide,
bis(3,5-dichloro-4-hydroxyphenyl)oxide,
p,p'-dihydroxydiphenyl,
3,3'-dichloro-4,4'-dihydroxydiphenyl,
bis(hydroxyphenyl)sulfone, resorcinol, hydroquinone,
1,4-dihydroxy-2,5-dichlorobenzene,
1,4-dihydroxy-3-methylbenzene,
bis(4-hydroxyphenyl)sulfide and
bis(4-hydroxyphenyl)sulfoxide. Out of these,
2,2-bis(4-hydroxyphenyl)propane is particularly preferred.

Examples of the carbonic acid diester compound used in the present invention include diphenyl carbonate, ditolyl carbonate, bis(chlorophenyl)carbonate, m-cresyl carbonate, dinaphthyl carbonate, bis(diphenyl)carbonate, dimethyl carbonate, diethyl carbonate, dibutyl carbonate and dicyclohexyl carbonate. Out of these, diphenyl carbonate is particularly preferred.

As for the ratio of the two raw materials used in the present invention, the molar ratio obtained by dividing the number of moles of the carbonic acid diester compound by the number of moles of the aromatic dihydroxy compound is preferably selected from a range of 1.00 to 1.10.

The aromatic polycarbonate of the present invention may further contain optionally an aliphatic diol such as ethylene glycol, 1,4-butanediol, 1,4-cyclohexane dimethanol or 1,10-decanediol, a dicarboxylic acid such as succinic acid, isophthalic acid, 2,6-naphthalenedicarboxylic acid, adipic acid, cyclohexanecarboxylic acid or terephthalic acid and an oxy acid such as lactic acid, P-hydroxybenzoic acid or 6-hydroxy-2-naphthoic acid.

Although the catalyst used in the present invention is not limited to a particular kind, an ester exchange catalyst comprising a basic nitrogen-containing compound and an alkali metal compound and/or an alkaline earth metal compound may be used.

Any conventionally known alkali metal and/or alkaline earth metal compound(s) may be used in the present invention if they/it do(es) not worsen the color of the obtained aromatic polycarbonate.

The alkali metal compound used as a catalyst is a hydroxide, bicarbonate, carbonate, acetate, nitrate, nitrite, sulfite, cyanate, thiocyanate, stearate, borohydride, benzoate, hydrogenphosphate, bisphenol or phenol salt of an alkali metal.

Specific examples of the alkali metal compound include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium nitrate, potassium nitrate, lithium nitrate, sodium nitrite, potassium nitrite, lithium nitrite, sodium sulfite, potassium sulfite, lithium sulfite, sodium cyanate, potassium cyanate, lithium cyanate, sodium thiocyanate, potassium thiocyanate, lithium thiocyanate, sodium stearate, potassium stearate, lithium stearate, sodium borohydride, potassium borohydride, lithium borohydride, sodium phenylborate, sodium benzoate, potassium benzoate, lithium benzoate, disodium hydrogenphosphate, dipotassium hydrogenphosphate, dilithium hydrogenphosphate, disodium salts, dipotassium salts and dilithium salts of bisphenol A, and sodium salts, potassium salts and lithium salts of phenol.

The alkaline earth metal compound used as a catalyst is a hydroxide, bicarbonate, carbonate, acetate, nitrate, nitrite, sulfite, cyanate, thiocyanate, stearate, benzoate, bisphenol or phenol salt of an alkaline earth metal.

Specific examples of the alkaline earth metal compound include calcium hydroxide, barium hydroxide, strontium hydroxide, calcium bicarbonate, barium bicarbonate, strontium bicarbonate, calcium carbonate, barium carbonate, strontium carbonate, calcium acetate, barium acetate, strontium acetate, calcium nitrate, barium nitrate, strontium nitrate, calcium nitrite, barium nitrite, strontium nitrite, calcium sulfite, barium sulfite, strontium sulfite, calcium cyanate, barium cyanate, strontium cyanate, calcium thiocyanate, barium thiocyanate, strontium thiocyanate, calcium stearate, barium stearate, strontium stearate, calcium borohydride, barium borohydride, strontium borohydride, calcium benzoate, barium benzoate, strontium benzoate, calcium salts, barium salts and strontium salts of bisphenol A, and calcium salts, barium salts and strontium salts of phenol.

In the present invention, (a) an alkali metal salt of an ate complex of a group XIV element of the periodic table or (b) an alkali metal salt of an oxo acid of a group XIV element of the periodic table may be optionally used as the alkali metal compound of the catalyst. The group XIV element of the periodic table is silicon, germanium or tin.

Examples of the alkali metal salt of the ate complex of the group XIV element of the periodic table (a) are enumerated in JP-A 7-268091 (the term "JP-A" as used herein means an "unexamined published Japanese patent application"). Specifically, germanium (Ge) compounds include NaGe(OMe)₅, NaGe(OEt)₃, NaGe(OPr)₅, NaGe(OBu)₅, NaGe(OPh)₅, LiGe(OMe)₅, LiGe(OBu)₅ and LiGe(OPh)₅.

Tin(Sn)compounds include NaSn (OMe)₃, NaSn(OMe)₂(OEt), NaSn(OPr)₃, NaSn(O-n-C₆H₁₃)₃, NaSn(OMe)₅, NaSn(OEt)₅, NaSn(OBu)₅, NaSn(O-n-C₁₂H₂₅)₅, NaSn(OEt), NaSn(OPh)₅ and NaSnBu₂(OMe)₃.

Preferred examples of the alkali metal salt of the oxo acid of the group XIV element of the periodic table (b) include alkali metal salts of silicic acid, stannic acid, germanium(II) acid (germanous acid) and germanium(IV) acid (germanic acid).

The alkali metal salt of silicic acid is, for example, an acidic or neutral alkali metal salt of monosilicic acid or a condensate thereof, as exemplified by monosodium orthosilicate, disodium orthosilicate, trisodium orthosilicate and tetrasodium orthosilicate.

The alkali metal salt of stannic acid is, for example, an acidic or neutral alkali metal salt of monostannic acid or a condensate thereof, as exemplified by disodium monostannate (Na₂SnO₃·XH₂O, X = 0 to 5) and tetrasodium monostannate (Na₄SnO₄).

The alkali metal salt of germanium(II) acid (germanous acid) is, for example, an acidic or neutral alkali metal salt of monogermanous acid or a condensate thereof, as exemplified by monosodium germanate (NaHGeO₂).

The alkali metal salt of germanium(IV) acid (germanic acid) is, for example, an acidic or neutral alkali metal salt of monogermanium(IV) acid or a condensate thereof, as exemplified by monolithium orthogermanate (LiH₃GeO₄), disodium orthogermanate, tetrasodium orthogermanate, disodium digermanate (Na₂Ge₂O₅), disodium tetragermanate (Na₂Ge₄O₉) and disodium pentagermanate (Na₂Ge₅O₁₁).

The alkali metal compound or alkaline earth metal compound is preferably used as a catalyst in an amount of 1 x 10⁻⁸ to 5 x 10⁻⁵ equivalent in terms of the alkali metal element or alkaline earth metal element based on 1 mol of the aromatic diol compound. It is more preferably 5 x 10⁻⁷ to 1 x 10⁻⁵ equivalent based on the same standard.

When the amount of the alkali metal element or alkaline earth metal element contained in the catalyst is outside the above range of 1 x 10⁻⁸ to 5 x 10⁻⁵ equivalent based on 1 mol of the aromatic diol compound, it exerts a bad influence upon the physical properties of the obtained aromatic polycarbonate, or an ester exchange reaction does not fully proceed, thereby making it impossible to obtain a high molecular weight aromatic polycarbonate.

Examples of the basic nitrogen-containing compound as a catalyst include ammonium hydroxides having an alkyl, aryl or alkylaryl group such as tetramethylammonium hydroxide (Me₄NOH), tetraethylammonium hydroxide (Et₄NOH), tetrabutylammonium hydroxide (Bu₄NOH), benzyltrimethylammonium hydroxide (φ-CH₂(Me)₃NOH) and hexadecyltrimethylammonium hydroxide; tertiary amines such as triethylamine, tributylamine, dimethylbenzylamine and hexadecyldimethylamine; and basic salts such as tetramethylammonium borohydride (Me₄NBH₄), tetrabutylammonium borohydride (Bu₄NBH₄), tetrabutylammonium tetraphenylborate (Me₄NBPh₄) and tetrabutylammonium tetraphenylborate (Bu₄NBPh₄).

The above nitrogen-containing basic compound is used preferably in an amount of 1 x 10⁻⁵ to 5 x 10⁻³ equivalent in terms of the ammonia nitrogen atom contained in the nitrogen-containing basic compound based on 1 mol of the aromatic diol compound. The amount is more preferably 2 x 10⁻⁵ to 5 x 10⁻⁴ equivalent, particularly preferably 5 x 10⁻⁵ to 5 x 10⁻⁴ equivalent based on the same standard.

In the present invention, the ratio of the alkali metal compound, alkaline earth metal compound and
nitrogen-containing basic compound to the charged aromatic diol compound (also called aromatic dihydroxy compound) is expressed by "W (numerical value) equivalent of Z (name of the compound) in terms of metal or basic nitrogen based on 1 mol of the aromatic dihydroxy compound". It means that the amount of Z corresponds to W mol when Z has one sodium atom as in the case of sodium phenoxide or
2,2-bis(4-hydroxyphenyl)propane monosodium salt or has one basic nitrogen atom as in the case of triethylamine and to W/2 mol when Z has two sodium atoms as in the case of 2,2-bis(4-hydroxyphenyl)propane disodium salt.

At least one cocatalyst selected from the group consisting of an oxoacid of a group XIV element of the periodic table and an oxide of the same element may be used as required in combination with the above catalyst in the polycondensation reaction of the present invention.

Undesirable side reactions such as branching reaction liable to occur during a polycondensation reaction and the generation of foreign matter or burn mark in amolding apparatus during molding are more effectively suppressed without ill-affecting the terminal blocking reaction and polycondensation reaction rate by using these cocatalysts in specific ratios.

The results of researches conducted by the inventors of the present invention have revealed that foreign matter contained in the aromatic polycarbonate can be removed extremely efficiently by a specific filtration treatment.

Although the molecular weight of the aromatic polycarbonate used in the present invention to be subjected to the filtration treatment is not particularly limited, an aromatic polycarbonate having a viscosity average molecular weight of 10,000 or more is preferably used because an aromatic polycarbonate having a low degree of polymerization has low physical properties and its application is extremely limited. When the molecular weight is too high, the filtration operation pressure of the filter unit becomes high. Therefore, an aromatic polycarbonate having a viscosity average molecular weight of 50,000 or less is preferred for filtration in the present invention.

The filter unit used in the present invention is an apparatus for removing foreign matter contained in a polycarbonate by filtration and comprises an inflow path for guiding the polycarbonate in a molten state to be filtered to filter elements, filter elements for filtering the polycarbonate, an outflow path for guiding the filtered polycarbonate to the outside of the filter, and a vessel for storing these. The filter elements are polycarbonate filtering means stored in the filter unit.

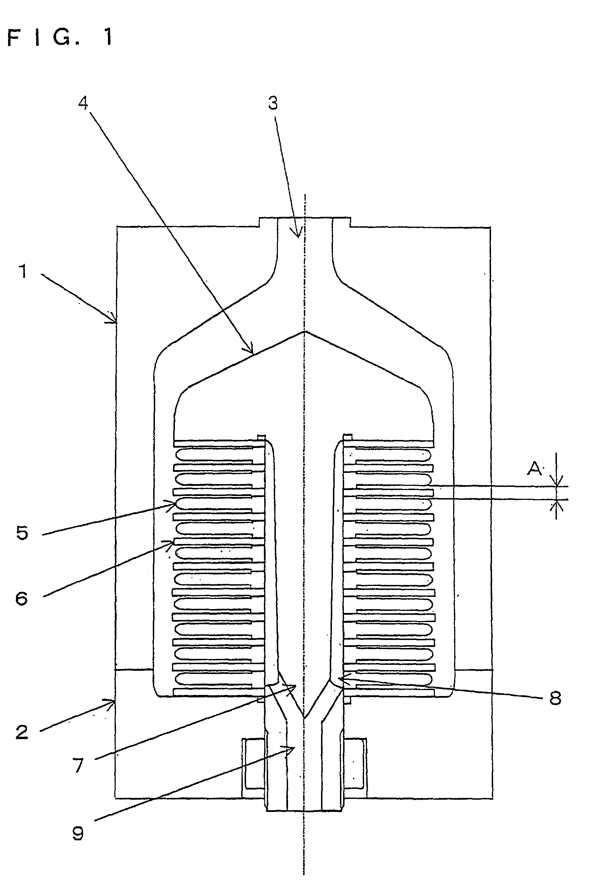

The disk type filter elements and filter unit of the present invention will be described hereinbelow with reference to Figs. 1 to 3. Figs. 1 to 3 show the present invention and the present invention is not limited by these figures and a description based on these figures.

Fig. 1 is a sectional view of the filter unit in which disk type filter elements 5 are piled up alternately with spacers 6 and pressed against a flange plate 2 by a filter holder 4 to be fixed in a space defined by a filtration vessel 1 and the flange plate 2.

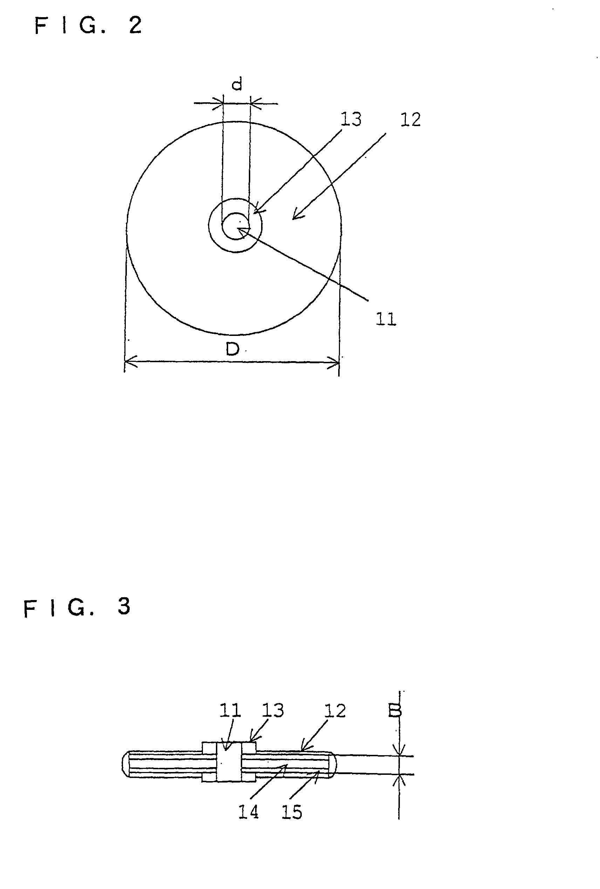

As shown in Figs. 2 and 3, each of the disk type filter elements 5 has a filter medium 12 for filtering a polymer and a hub 13, and the hubs 13 are placed one upon another to form a ring-shaped flow path (annular groove) (numeral 8 in Fig. 1) consisting of a center pole 7 and a hole 11 when the disk type filter elements 5 are piled up together.

The center pole 7 has a polygonal or star-shaped cross section, is inscribed in the hole 11 and serves to determine the piling-up position in a radial direction by alternately piling up the disk type filter elements 5 and the spacers 6-through the center pole 7.

The hubs 13 are pressed against one another or against the flange plate 2 by the filter holder 4 shown in Fig. 1 and fixed.

The polymer passes through a polymer inflow path 3 and is filtered by the disk type filter elements 5, and the filtered polymer passing through the annular groove 8 is discharged to the outside of the filter unit through a polymer outflow path 9.

As shown in Fig. 3, a support plate 15 composed of a punching plate or the like and a retainer 14 composed of a metal net of large meshes or the like are disposed in the interior (secondary flow path) of each disk type filter element 5 so that the thickness B of the secondary flow path is prevented from being reduced by pressure at the time of filtration.

The piling-up clearance in the present invention is expressed by distance A in Fig. 1, the outer diameter of the disk type filter element is expressed by distance D, and the inner diameter of the disk type filter element is expressed by distance d.

The filter medium (numeral 12 in Fig. 2) of the disk type filter element used in the present invention serves to directly remove foreign matter contained in the polycarbonate, must retain predetermined opening size with a small variation and must have chemical stability against a substance to be treated, heat resistance and a certain measure of pressure resistance. The filter medium is preferably made from a known material which satisfies the above requirements, the most preferably a metal net formed by weaving a metal thin wire or a filter composed of a sintered metal fiber nonwoven fabric produced by forming metal short fibers by a wet or dry process and sintering them to fix the texture.

In the present invention, a polycarbonate free from foreign matter can be produced by filtering a polycarbonate containing foreign matter using one or more filter units. The filter units used may be arranged in series or parallel to each other.

The filter element used in the filter unit of the present invention is preferably a disk type filter element.

In the case of a polycarbonate obtained by melt polymerization, polymerization is carried out continuously in most cases and a polymerizer and a filter unit are directly connected to each other in most cases. Therefore, a trouble with the filter unit may lead to the interruption of the polymerization process. When the filter units are arranged parallel to each other and used by switching, a quality fluctuation often occurs at the time of switching. Therefore, the filter unit preferably has a long service life (exactly speaking, service life of the filter element) and disk type filter elements are preferably used because they can provide a large filtration area when they are piled up together.

Although the disk type filter elements can provide a large filtration area, they have such a defect that a drift occurs more easily as the filtration area increases.

Meanwhile, it has been found from studies conducted by the inventors of the present invention that a polycarbonate itself is easily branched or crosslinked to form a gel due to its long-term heat history even when entry of oxygen is prevented unlike a polyester or polyolefin. Therefore, a drift in the filter unit causes the formation of a gel in the filter unit which is a fatal problem in the case of a polycarbonate. Consequently, to make effective use of the disk type filter elements for the filtration of the polycarbonate, this drift problem must be solved.

Based on the above understanding, the inventors of the present invention have conducted intensive studies to find a solution to the above problem and have found that the above drift problem can be solved by satisfying some conditions before use of the disk type filter elements, thereby making it possible to obtain a high-quality polycarbonate containing no gel or foreign matter for a long time using a filter unit.

Any material may be used as the material of the filter unit and the disk type filter element if it is inactive with a polycarbonate obtained by polymerization and contains no component dissolved in the polycarbonate. Generally speaking, a metal, particularly stainless steel is used. For example, SUS304, SUS316 and the like are preferably used.

The opening size of the disk type filter element in the present invention is the average opening diameter of the filter medium of the disk type filter element. Supposing that foreign matter is spherical, this size is equivalent to the minimum particle diameter, capable of eliminating 95 % or more of the foreign matter while it passes through the disk type filter element.

In the present invention, the opening size of the disk type filter element is 40 µm or less, preferably 20 µm or less, more preferably 10 µm or less. When the opening size of the disk type filter element is too large, the amount of foreign matter contained in the obtained polycarbonate increases disadvantageously.

The ratio of the inner diameter to the outer diameter of the disk type filter element used in the present invention must be 1/7 or more, preferably 1/5 or more. When the ratio is smaller than 1/7, the difference in filterability between the inner circumferential portion and the outer circumferential portion of each disk type filter element becomes marked and a gel is easily formed in the outermost circumferential portion and the innermost circumferential portion disadvantageously.

As is obvious from its definition, the inner diameter/outer diameter ratio does not exceed "1".

The above phenomenon that a gel is formed by a drift occurs more easily in the outer circumferential portion than the inner circumferential portion. Therefore, the outer diameter of the disk type filter element used is set to 15 inches (38.1 cm) or less, preferably 12 inches (30.5 cm) or less while the above inner diameter/outer diameter ratio is maintained to obtain a greater drift prevention effect.

Meanwhile, a larger outer diameter is advantageous from the viewpoint of the filtration area of the disk type filter element. From this viewpoint, the outer diameter of the disk type filter element used is preferably 4 inches (10.2 cm) or more, more preferably 6 inches (15.2 cm) or more. Therefore, the disk type filter element of the present invention which can prevent a drift and secure a large filtration area has an outer diameter of preferably 15 inches (38.1 cm) or less and 4 inches (10.2 cm) or more, more preferably 12 inches (30.5 cm) or less and 6 inches (15.2 cm) or more.

The inner diameter of the disk type filter element used in the present invention is not limited if it satisfies the above inner diameter/outer diameter ratio. In the disk type filter element, the filtered polymer is generally discharged to the outside of a system through the polymer flow path (numeral 8 in Fig. 1) around the center pole (numeral 7 in Fig. 1) provided along the inner diameter and an excessively small inner diameter generates a large flow resistance. Therefore, the inner diameter is generally 2 inches (5.08 cm) to 3 inches (7.62 cm).

Since a plurality of disk type filter elements are used to form a single filter unit in the present invention, a drift between adjacent disk type filter elements is a big problem to be solved.

Also in this case, the formation of a large filtration area and the prevention of a drift conflict with each other and a drift easily occurs between adjacent disk type filter elements though the filtration area becomes larger as the number of disk type filter elements to be piled up together increases.

According to studies conducted by the inventors of the present invention, the number of disk type filter elements to be piled up together and stored in one filter unit is preferably 500 or less, more preferably 200 or less. When the number of disk type filter elements to be piled up together is too large, a drift between adjacent disk type filter elements becomes marked, the quality of the obtained polymer degrades, and the service life of the filter unit may be shortened disadvantageously. When the disk type filter elements to be piled up together and stored in one filter unit are counted as one row, two rows or more of the disk type filter elements are undesirable from the viewpoint of the suppression of a drift. Therefore, when 200 disk type filter elements are to be piled up together, they are preferably piled up together in one row.

To prevent a drift between adjacent disk type filter elements and a drift in one disk type filter element, the clearance between adjacent disk type filter elements to be piled up is also important. This piling-up clearance is preferably substantially 5 mm or less. It is not preferred to narrow the piling-up clearance unlimitedly. Basically, the lower limit of piling-up clearance is preferably determined based on the following concept.

When a flow path through which the polymer before filtration runs is considered as a primary flow path and a flow path through which the polymer after filtration runs is considered as a secondary flow path with the filtration plane as the boundary therebetween, the primary flow path is formed between adjacent disk type filter elements out of the piled up disk type filter elements and the secondary flow path is formed within each disk type filter element. When the primary flow path is narrow at this point (in other words, the piling-up interval is narrower than the flow path formed within each disk type filter element), the polymer tends to run into the secondary flow path through a filtration layer from the outer circumferential portion of the primary flow path before it reaches the inner circumferential portion of the primary flow path between adjacent disk type filter elements, whereby a dead space is formed in the inner circumferential portion of the disk type filter element to form a gel. When the primary flow path is too wide, the opposite phenomenon occurs and a gel is formed in the outer circumferential portion of the disk type filter element, thereby causing the deterioration of quality and a reduction in the service life of the filter unit. Therefore, it is ideal that the flow resistance of the primary flow path should be equal to the flow resistance of the secondary flow path. To this end, the piling-up clearance between adjacent disk type filter elements (to be referred to as "piling-up interval" hereinafter) is made substantially equal to the thickness of the secondary flow path formed within each disk type filter element as one of standards. Stated more specifically, the difference between the piling-up interval and the thickness of the secondary flow path formed within each disk type filter element used is desirably within ±20 % of the thickness of the secondary flow path. The thickness of the secondary flow path is thickness B in Fig. 3.

The lower limit is desirably 0.5 mm in consideration of working accuracy.

In the present invention, the word "substantially" in the expression "the piling-up clearance between adjacent disk type filter elements is preferably substantially 5 mm or less" means such as described in the following paragraphs (1) to (3).
(1) When the piling-up clearance (evaluated from distances at 10 points on each filter medium 12) between adjacent disk type filter elements is measured at 10 arbitrary points on the filter medium 12 shown in Fig. 2 which are selected such that they have almost the same interval to judge whether it is 5 mm or less, a group of the obtained measurement values is called "measurement unit". Each measurement unit has 10 measurement values of piling-up interval.
(2) As for the measurement unit in the above paragraph (1), the measurement unit at least 9 measurement values of which have a piling-up interval of 5 mm or less is called "measurement unit having the accepted clearance".
(3) When the above measurement (1) is made on all the piling-up clearances between adjacent disk type filter elements to be stored in one filter unit, if the ratio of measurement units having the accepted clearance to the total number of measurement units is 90 % or more, "the piling-up clearance between adjacent disk type filter elements is substantially 5 mm or less".

The method of maintaining the above substantial piling-up interval to a predetermined value is not particularly limited. For example, as shown in Fig. 1, a radial or concentric circular spacer 6 made of a wire material having a thickness equal to the predetermined piling-up interval is inserted between adjacent disk type filter elements 5.

It is considered as a matter of course that a polycarbonate having a low content of foreign matter is obtained by using filter elements having a small opening size for the filtration of the polycarbonate. In fact, when the opening size is reduced, the quality of the obtained polymer lowers. This is a phenomenon which is closely connected with the feature of the polycarbonate that a gel is easily formed by the retention of the polymer as described above and occurs due to the expansion of the polymer retention portion of the filter element caused by a reduction in the opening size. Therefore, appropriate operation conditions are required to achieve a improved accuracy when filter elements having a small opening size are used.

In the present invention, the control of the pressure difference (a difference between the pressure of the inlet and the pressure of the outlet of the filter unit, for example, a difference between the pressure of the polymer inflow path 3 and the pressure of the polymer outflow path 9 in Fig. 1), the throughput per unit area of the filter element of the filter unit, the average retention time in the filter unit and the flow rate of the polymer in the filter unit to optimum values when using the filter unit is important and a polycarbonate having excellent quality can be stably produced with disk type filter elements having a small opening size only by performing the above controlling procedures.

In the present invention, maintaining the pressure difference at an optimum value is effective in obtaining the effect of disk type filter elements having a small opening size. The pressure difference in the present invention is preferably 20 kg/cm² or more when disk type filter elements having an opening size of 20 µm are used and 40 kg/cm² or more when disk type filter elements having an opening size of 10 µm or less are used. The operation at a pressure difference below the above limit is undesirable because the quality of the obtained polymer does not improve or, conversely, often deteriorates with a reduction in the opening size. The upper limit of pressure difference is usually 150 to 200 kg/cm².

The operation pressure source of the filter unit is generally a gear pump, screw feeder, extruder or the like and its type is not restricted in the present invention.

The filtration operation of the present invention is carried out at a polymer temperature of preferably not higher than 350°C, more preferably not higher than 330°C.

In the present invention, maintaining the throughput of the polycarbonate per filtration unit area of the disk type filter elements at an optimum value is another effective means for obtaining the effect of disk type filter elements having a small opening size. The throughput of the polycarbonate per filtration unit area of the disk type filter elements in the present invention is a value obtained by dividing the total amount (kg/hr) of the polymer passing through the disk type filter elements by the total filtration area (m²) of the disk type filter elements used. In the present invention, this value is preferably set to 50 kg/m²/hr or more, more preferably 100 kg/m²/hr or more, the most preferably 150 kg/m²/hr or more. When the throughput of the polycarbonate per filtration unit area of the disk type filter elements falls below the above limit, the quality, especially color of the obtained polymer deteriorates and the gel content increases disadvantageously. The upper limit of throughput of the polycarbonate per unit area is usually 1,500 to 2,000 kg/m²/hr.

In the present invention, adjusting the V/W value to 0.2 to 10 min is preferred for obtaining the effect of disk type filter elements having a small opening size. V represents the space volume of the filter unit, W the volume flow rate of the polycarbonate passing through the filter unit per minute and V/W the average retention time of the polycarbonate passing through the filter unit. When V/W falls below the above limit, the filtration operation pressure rises disadvantageously. When V/W exceeds the above limit, the color of the obtained polymer worsens disadvantageously. In an extreme case, the gel content may increase.

In the present invention, the flow velocity of the polymer in the filter unit is also an important control value for improving the quality of the obtained polycarbonate. The flow velocity of the polymer in the filter unit in the present invention is the average flow velocity in the filter unit and a value represented by W x 1000/A (cm/min) wherein A is the maximum area (cm²) of the polymer flowpath in the filtration vessel and W is the flow rate (L/min) of the filtered polymer.

In the present invention, it is important that the average flow velocity of the polymer should be maintained at a range of 1 to 10,000 cm/min, preferably 10 to 8,000 cm/min, more preferably 50 to 5,000 cm/min. When the average flow velocity of the polymer falls below 1 cm/min, the quality of the obtained polymer deteriorates disadvantageously in most cases. When the average flow velocity exceeds 10,000 cm/min, the operation pressure of filtration becomes extremely high disadvantageously in most cases.

When the polycarbonate used in the present invention is produced by melt polymerization, the catalyst is preferably deactivated after the end of polymerization. Conventionally known catalyst deactivators are effectively used as the catalyst deactivator used in the present invention, out of which ammonium salts and phosphonium salts of sulfonic acid are preferred and ammonium salts and phosphonium salts of dodecylbenzenesulfonic acid such as tetrabutylphosphonium dodecylbenzenesulfonate and tetrabutylammonium dodecylbenzenesulfonate and ammonium salts and phosphonium salts of paratoluenesulfonic acid such as tetrabutylphosphonium paratoluenesulfonate and tetrabutylammonium paratoluenesulfonate are more preferred.

Sulfonic acid esters are also preferred catalyst deactivators. Out of these sulfonic acid esters, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferred.

Out of these, tetrabutylphosphonium dodecylbenzenesulfonate is particularly preferred.

The amount of the catalyst deactivator is 0.5 to 50 mols, preferably 0.5 to 10 mols, more preferably 0.8 to 5 mols based on 1 mol of the polymerization catalyst selected from alkali metal compounds and/or alkaline earth metal compounds.

Other additives may be added to the polycarbonate in limits not prejudicial to the object of the present invention.

The additives include a processing stabilizer, heat resistant stabilizer, antioxidant, optical stabilizer, ultraviolet light absorber, metal inactivating agent, metal soap, nucleating agent, antistatic agent, slipping agent, antiblocking agent, lubricant, flame retardant, release agent, mildew-proof agent, colorant, anti-fogging agent, natural oil, synthetic oil, wax, organic filler, inorganic filler and epoxy compound.

Out of these, a heat resistant stabilizer, ultraviolet light absorber, release agent, colorant and the like are generally used and may be used in combination of two or more.

For example, a phosphorus compound, phenol-based stabilizer, organic thioether-based stabilizer, hindered amine-based stabilizer and the like may be used in the present invention as the processing stabilizer, heat resistant stabilizer and antioxidant.

General ultraviolet light absorbers are used as the optical stabilizer and ultraviolet light absorber, as exemplified by salicylic acid-based, benzophenone-based, benzotriazole-based and cyanoacrylate-based ultraviolet light absorbers.

Generally known release agents may be used as the release agent, as exemplified by hydrocarbon-based release agents such as a paraffin, fatty acid-based release agents such as stearic acid, fatty acid amide-based release agents such as stearamide, alcohol-based release agents such as stearyl alcohol and pentaerythritol, fatty acid ester-based release agents such as glycerol monostearate, and silicone-based release agents such as silicone oil.

Organic and inorganic pigments and dyes may be used as the colorant

The metal inactivating agent is, for example, N,N'-[3-(3,5-di-t-butyl-4-hydroxyphenyl)propionyl] hydrazine and the metal soap is, for example, calcium stearate or nickel stearate.

Examples of the antistatic agent include quaternary ammonium salts such as (β-lauramidopropyl)trimethylammonium methylsulfate and alkylphosphate-based compounds.

Examples of the nucleating agent include sorbitol-based and phosphate-based compounds such as sodium di(4-t-butylphenyl)phosphonate, dibenzylidene sorbitol and methylenebis(2,4-di-t-butylphenol)acid phosphate sodium salt.

Examples of the lubricant include erucamide and stearic acid monoglyceride and examples of the flame retardant include halogen-containing phosphoric acid esters such as tris(2-chloroethyl)phosphate, halides such as hexabromocyclododecane and decabromophenyl oxide, and inorganic metallic compounds such as antimony trioxide, antimony pentaoxide and aluminum hydroxide, and mixtures thereof.

These catalyst deactivators or other additives are added to and kneaded with a molten polycarbonate directly or in the form of a solution or dispersion in an appropriate solvent or polymer, or a master pellet. Equipment for carrying out this operation is not limited to a particular type but a twin-screw extruder or the like is preferred. When additives are supplied in the form of a solution, a quantitative pump such as a plunger pump is used and when additives are supplied in the form of a master polymer, a side feeder is generally used. When the catalyst deactivator or other additives are dissolved or dispersed in a solvent, a vented twin-screw extruder is particularly preferably used.

Other additives are preferably added to the molten polycarbonate together with or separately from the catalyst deactivator,

The desirable molded product in the present invention is generally in the form of a pellet, chip, film, sheet or the like. There is no restriction to the form as far as the polycarbonate of the present invention is concerned and a product having a desired form can be produced directly from a highly viscous material without the step of cooling and solidifying the highly viscous material, followed by remelting.

### Brief Description of the Drawings

Fig. 1 is a sectional view of a filter unit according to the present invention;
Fig. 2 is a diagram showing an example of a disk type filter element according to the present invention; and
Fig. 3 is a sectional view of the disk type filter element of Fig. 2.
Reference symbols in the figures denote the following elements.
1. filtration vessel
2. flange plate
3. polymer inflow path
4. filter holder
5. disk type filter element
6. spacer
7. center pole
8. annular groove
9. polymer outflow path
11. hole
12. filter medium
13. hub
14. retainer
15. support plate
A. piling-up interval
B. thickness of secondary flow path
D. outer diameter of disk type filter element
d. inner diameter of disk type filter element

### Examples

Examples of the present invention are given below. These examples are provided for the purpose of further illustrating the present invention but are in no way to be taken as limiting.

### Example 1

30 disk type filter elements made of SUS316 and having an opening size of 20 µm, an inner diameter/outer diameter ratio of 1/4.8 and an outer diameter of 12 inches (30.5 cm) were mounted in a filter unit having a total capacity of 27 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 17 liters/min at 270°C to be filtered. The amount of the polycarbonate filtered per filtration unit area of the disk type filter elements was 263 kg/m²/hr, the ratio (V/W) of the volume V (L) of the filtration vessel to the flow rate W (L/min) of the filtered polymer was 1.6 min, and W x 1000/A was 172 cm/min. Under the conditions, the initial pressure difference was 40 kgf/cm². When filtration was further continued for 20 days under the above conditions, the pressure difference at the end of filtration was 50 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was stably 0 to 2 per kg throughout the operation period.

When the filtration operation was terminated and the inside of the filter unit was inspected by disassembly, a gel which emitted light by ultraviolet radiation was slightly observed on the outer circumferential portion of the disk type filter element.

### Example 2

30 disk type filter elements made of SUS316 and having an opening size of 20 µm, an inner diameter/outer diameter ratio of 1/4 and an outer diameter of 12 inches (30.5 cm) were mounted in a filter unit having a total capacity of 27 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 17 liters/min at 270°C to be filtered. The amount of the polycarbonate filtered per filtration unit area of the disk type filter elements was 268 kg/m²/hr, the ratio (V/W) of the volume V (L) of the filtration vessel to the flow rate W (L/min) of the filtered polymer was 1.6 min, and W x 1000/A was 172 cm/min. Under the conditions, the initial pressure difference was 42 kgf/cm². When filtration was further continued for 20 days under the above conditions, the pressure difference at the end of filtration was 53 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was stably 0 to 1 per kg throughout the operation period.

When the filtration operation was terminated and the inside of the filter unit was inspected by disassembly, a gel which emitted light by ultraviolet radiation was not observed on the outer circumferential portion of the disk type filter element.

### Example 3

30 disk type filter elements made of SUS316 and having an opening size of 20 µm, an inner diameter/outer diameter ratio of 1/6 and an outer diameter of 12 inches (30.5 cm) were mounted in a filter unit having a total capacity of 27 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 17 liters/min at 270°C to be filtered. The amount of the polycarbonate filtered per filtration unit area of the disk type filter elements was 259 kg/m²/hr, the ratio (V/W) of the volume V (L) of the filtration vessel to the flow rate W (L/min) of the filtered polymer was 1.6 min, and W x 1000/A was 172 cm/min. Under the conditions, the initial pressure difference was 38 kgf/cm². When filtration was further continued for 20 days under the above conditions, the pressure difference at the end of filtration was 48 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was stably 10 or less per kg throughout the operation period.

When the filtration operation was terminated and the inside of the filter unit was inspected by disassembly, a trace amount of a gel which emitted light by ultraviolet radiation was observed on the outer circumferential portion of the disk type filter element. The obtained polycarbonate was satisfactory as a whole.

### Example 4

30 disk type filter elements made of SUS316 and having an opening size of 40 µm, an inner diameter/outer diameter ratio of 1/2.7 and an outer diameter of 8 inches (20.3 cm) were mounted in a filter unit having a total capacity of 14 liters at piling-up intervals of 1.9 mm, and a polycarbonate having a viscosity average molecular weight of 24,000 obtained by melt polymerizing diphenyl carbonate and bisphenol A was supplied directly from a polymerizer into the filter unit at a flow rate of 13 liters/min at 310°C to be filtered. The amount of the polycarbonate filtered per filtration unit area of the disk type filter elements was 504 kg/m²/hr, the ratio (V/W) of the volume V (L) of the filtration vessel to the flow rate W (L/min) of the filtered polymer was 1.1 min, and W x 1000/A was 178 cm/min. Under the conditions, the initial pressure difference was 90 kgf/cm². When filtration was further continued for 20 days under the above conditions, the pressure difference at the end of filtration was 110 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was stably 5 or less per kg throughout the operation period.

When the filtration operation was terminated and the inside of the filter unit was inspected by disassembly, a gel which emitted light by ultraviolet radiation was rarely observed on the outer circumferential portion of the disk type filter element.

### Example 5

30 disk type filter elements made of SUS316 and having an opening size of 40 µm, an inner diameter/outer diameter ratio of 1/6 and an outer diameter of 12 inches (30.5 cm) were mounted in a filter unit having a total capacity of 27 liters at piling-up intervals of 1.9 mm, and a polycarbonate having a viscosity average molecular weight of 24,000 obtained by melt polymerizing diphenyl carbonate and bisphenol A was supplied directly from a polymerizer into the filter unit at a flow rate of 13 liters/min at 310°C to be filtered. The amount of the polycarbonate filtered per filtration unit area of the disk type filter elements was 198 kg/m²/hr, the ratio (V/W) of the volume V (L) of the filtration vessel to the flow rate W (L/min) of the filtered polymer was 2.1 min, and W x 1000/A was 131 cm/min. Under the conditions, the initial pressure difference was 60 kgf/cm². When filtration was further continued for 20 days under the above conditions, the pressure difference at the end of filtration was 65 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was stably 20 or less per kg throughout the operation period.

When the filtration operation was terminated and the inside of the filter unit was inspected by disassembly, a gel which emitted light by ultraviolet radiation was observed on the outer circumferential portion of the disk type filter element but the obtained polycarbonate was satisfactory as a whole.

### Comparative Example 1

30 disk type filter elements made of SUS316 and having an opening size of 20 µm, an inner diameter/outer diameter ratio of 1/6 and an outer diameter of 18 inches (45.7 cm) were mounted in a filter unit having a total capacity of 66 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 38 liters/min at 270°C to be filtered. The amount of the polycarbonate filtered per filtration unit area of the disk type filter elements was 258 kg/m²/hr, the ratio (V/W) of the volume V (L) of the filtration vessel to the flow rate W (L/min) of the filtered polymer was 1.7 min, and W x 1000/A was 257 cm/min. Under the conditions, the initial pressure difference was 40 kgf/cm². When filtration was further continued for 20 days under the above conditions, the pressure difference at the end of filtration was 50 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed was 20 per kg throughout the operation period and 100 or more gels per kg were observed three times.

When the filtration operation was terminated and the inside of the filter unit was inspected by disassembly, a gel which emitted light by ultraviolet radiation was observed on about 1/5 of the outer circumferential portion of the disk type filter element.

### Comparative Example 2

30 disk type filter elements made of SUS316 and having an opening size of 20 µm, an inner diameter/outer diameter ratio of 1/12 and an outer diameter of 24 inches (61.0 cm) were mounted in a filter unit having a total capacity of 110 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 70 liters/min at 270°C to be filtered. The amount of the polycarbonate filtered per filtration unit area of the disk type filter elements was 261 kg/m²/hr, the ratio (V/W) of the volume V (L) of the filtration vessel to the flow rate W (L/min) of the filtered polymer was 1.6 min, and W x 1000/A was 359 cm/min. Under the conditions, the initial pressure difference was 40 kgf/cm². When filtration was further continued for 20 days under the above conditions, the pressure difference at the end of filtration was 50 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed changed from 30 per kg to more than 100 per kg irregularly throughout the operation period.

When the inside of the filter unit was inspected by disassembly after the end of filtration, a large number of gels which emitted light by ultraviolet radiation were observed on about 1/3 of the outer circumferential portion of the disk type filter element and the support plate of the filter medium of the disk type filter element.

### Comparative Example 3

30 disk type filter elements made of SUS316 and having an opening size of 20 µm, an inner diameter/outer diameter ratio of 1/7.2 and an outer diameter of 18 inches (45.7 cm) were mounted in a filter unit having a total capacity of 66 liters at piling-up intervals of 1.5 mm, and a polycarbonate having a viscosity average molecular weight of 15,200 obtained by melt polymerizing diphenyl carbonate and bisphenol A was supplied directly from a polymerizer into the filter unit at a flow rate of 38 liters/min at 270°C to be filtered. The amount of the polycarbonate filtered per filtration unit area of the disk type filter elements was 255 kg/m²/hr, the ratio (V/W) of the volume V (L) of the filtration vessel to the flow rate W (L/min) of the filtered polymer was 1.7 min, and W x 1000/A was 258 cm/min. Under the conditions, the initial pressure difference was 38 kgf/cm². When filtration was further continued for 20 days under the above conditions, the pressure difference at the end of filtration was 48 kgf/cm².

1 kg of the polymer obtained by filtration was dissolved in 10 kg of methylene chloride to prepare a solution which was then filtered by a filter having an opening size of 20 µm, and the filter was observed through a microscope under exposure to ultraviolet radiation to measure the gel content. As a result, the number of gels formed changed from 30 per kg to more than 100 per kg irregularly throughout the operation period.

When the inside of the filter unit was inspected by disassembly after the end of filtration, a large number of gels which emitted light by ultraviolet radiation were observed on about 1/3 of the outer circumferential portion of the disk type filter element and the support plate of the filter medium of the disk type filter element.

### Industrial Feasibility

The object of the present invention is to provide a process for producing a high-quality polycarbonate, which overcomes the above problems of the prior art, removes foreign matter efficiently using the filter unit, and suppresses discoloration, crosslinking and gel formation in the filter unit.

According to the process of the present invention, a high-quality polycarbonate and a molded product thereof can be produced by improving the above problems of the prior art, removing foreign matter efficiently by using the filter unit, and suppressing discoloration, crosslinking and gel formation in the filter unit.

## Claims

1. A process for the production of a polycarbonate, comprising filtering a polycarbonate having a viscosity average molecular weight of 10,000 or more in a molten state with at least one filter unit which stores a plurality of disk type filter elements having an outer diameter of 15 inches (38.1 cm) or less, an inner diameter/outer diameter ratio of 1/7 or more and an opening size of 40 µm or less piled up together.

2. The polycarbonate production process of claim 1, wherein the inner diameter/outer diameter ratio of each disk type filter element stored is 1/5 or more.

3. The polycarbonate production process of claim 1 or 2, wherein the outer diameter of each disk type filter element used is 4 inches (10.2 cm) or more.

4. The polycarbonate production process of any one of claims 1 to 3, wherein the outer diameter of each disk type filter element used is 12 inches (30.5 cm) or less and 6 inches (15.2 cm) or more.

5. The polycarbonate production process of any one of claims 1 to 4, wherein the number of disk type filter elements constituting one filter unit is 500 or less.

6. The polycarbonate production process of any one of claims 1 to 4, wherein the number of disk type filter elements constituting one filter unit is 200 or less.

7. The polycarbonate production process of any one of claims 1 to 6, wherein the piling-up clearance between adjacent disk type filter elements is substantially 5 mm or less.

8. The polycarbonate production process of any one of claims 1 to 7, wherein only one set of disk type filter elements piled up together are stored in one filter unit.

9. The polycarbonate production process of any one of claims 1 to 8, wherein each disk type filter element comprises a filter medium composed of a sintered metal fiber texture and/or metal net as a constituent element.

10. The polycarbonate production process of any one of claims 1 to 9, wherein the polycarbonate is produced by polycondensing an aromatic diol compound and a carbonic acid diester compound in the presence or absence of a catalyst.

11. The polycarbonate production process of any one of claims 1 to 10, wherein the polycarbonate produced by continuously polycondensing an aromatic diol compound and a carbonic acid diester compound in the presence or absence of a catalyst is mixed in a molten state with additives as required and directly filtered with a filter unit without cooling and solidifying it.

12. A filter unit for the production of a polycarbonate, which stores a plurality of disk type filter elements having an outer diameter of 15 inches (38.1 cm) or less, an inner diameter/outer diameter ratio of 1/7 or more and an opening size of 40 µm or less piled up together.

13. The filter unit of claim 12, wherein the inner diameter/outer diameter ratio of each disk type filter element stored is 1/5 or more.

14. The filter unit of claim 12 or 13, wherein the outer diameter of each disk type filter element used is 4 inches (10.2 cm) or more.

15. The filter unit of any one of claims 12 to 14, wherein the outer diameter of each disk type filter element used is 12 inches (30.5 cm) or less and 6 inches (15.2 cm) or more.

16. The filter unit of any one of claims 12 to 15, wherein the number of disk type filter elements constituting one filter unit is 500 or less.

17. The filter unit of any one of claims 12 to 15, wherein the number of disk type filter elements constituting one filter unit is 200 or less.

18. The filter unit of any one of claims 12 to 17, wherein the piling-up clearance between adjacent disk type filter elements is substantially 5 mm or less.

19. The filter unit of any one of claims 12 to 18 which stores only one set of disk type filter elements piled up together.

20. The filter unit of any one of claims 12 to 19, wherein the disk type filter element comprises a filter medium composed of a sintered metal fiber texture and/or metal net as a constituent element.

21. The filter unit of any one of claims 12 to 20, wherein the polycarbonate is produced by polycondensing an aromatic diol compound and a carbonic acid diester compound in the presence or absence of a catalyst.
